# EUROPÄISCHE PATENTSCHRIFT

(11) **EP 3 530 763 B1**
(45) Veröffentlichungstag und Bekanntmachung des Hinweises auf die Patenterteilung: **16.11.2022**
(21) Anmeldenummer: 19157890.5
(22) Anmeldetag: 19.02.2019
(51) Int. Cl.: B22F 10/28, B33Y 10/00, B33Y 80/00, C22C 1/04, C22C 14/00, B33Y 70/00

(54) **VERFAHREN ZUR HERSTELLUNG EINER SCHAUFEL EINER STRÖMUNGSMASCHINE AUS EINER GRADIERTEN TIAL-LEGIERUNG UND ENTSPRECHEND HERGESTELLTES BAUTEIL**
METHOD FORPRODUCING A BLADE OF A TURBOMACHINE FROM A GRADED TIAL ALLOY, AND CORRESPONDINGLY PRODUCED COMPONENT
PROCÉDÉ DE FABRICATION D'UNE AUBE DE TURBOMACHINE EN ALLIAGE DE TIAL GRADUÉ ET PIÈCE AINSI OBTENUE

(30) Priorität: 22.02.2018 DE 102018202723
(43) Veröffentlichungstag der Anmeldung: 28.08.2019
(73) Patentinhaber: MTU Aero Engines AG, 80995 München (DE)
(72) Erfinder: Schloffer, Martin, 81247 München (DE)

(56) Entgegenhaltungen:
- EP-A1- 3 216 547
- EP-A1- 3 238 868
- DE-A1-102011 008 809
- DE-B3-102015 103 422
- TANG H P ET AL: "Additive manufacturing of a high niobium-containing titanium aluminide alloy by selective electron beam melting", MATERIALS SCIENCE AND ENGINEERING: A, Bd. 636, 31. März 2015 (2015-03-31), Seiten 103-107, XP029171565, ISSN: 0921-5093, DOI: 10.1016/J.MSEA.2015.03.079
- GUSSONE JOACHIM ET AL: "Microstructure of [gamma]-titanium aluminide processed by selective laser melting at elevated temperat", INTERMETALLICS, ELSEVIER SCIENCE PUBLISHERS B.V, GB, Bd. 66, 18. Juli 2015 (2015-07-18), Seiten 133-140, XP029255198, ISSN: 0966-9795, DOI: 10.1016/J.INTERMET.2015.07.005
- GE WENJUN ET AL: "Effect of Process Parameters on Microstructure of TiAl Alloy Produced by Electron Beam Selective Melting", PROCEDIA ENGINEERING, ELSEVIER, AMSTERDAM, NL, Bd. 81, 15. Oktober 2014 (2014-10-15), Seiten 1192-1197, XP029078281, ISSN: 1877-7058, DOI: 10.1016/J.PROENG.2014.10.096
- SCHWERDTFEGER JAN ET AL: "Selective electron beam melting of Ti-48Al-2Nb-2Cr: Microstructure and al", INTERMETALLICS, ELSEVIER SCIENCE PUBLISHERS B.V, GB, vol. 49, 31 January 2014 (2014-01-31), pages 29-35, XP028633451, ISSN: 0966-9795, DOI: 10.1016/J.INTERMET.2014.01.004
- GUSSONE J ET AL: "Microstructure stability of [gamma]-TiAl produced by selective laser melting", SCRIPTA MATERIALIA, vol. 130, 30 November 2016 (2016-11-30), pages 110-113, XP029899221, ISSN: 1359-6462, DOI: 10.1016/J.SCRIPTAMAT.2016.11.028
- QU H P ET AL: "Microstructure and mechanical property of laser melting deposition (LMD) Ti/TiAl structural gradient material", MATERIALS AND DESIGN, LONDON, GB, vol. 31, no. 1, 1 January 2010 (2010-01-01), pages 574-582, XP026573953, ISSN: 0261-3069, DOI: 10.1016/J.MATDES.2009.07.004 [retrieved on 2009-07-07]

## Beschreibung

### HINTERGRUND DER ERFINDUNG

### GEBIET DER ERFINDUNG

Die vorliegende Erfindung betrifft ein Verfahren zur additiven Herstellung eines Bauteils, nämlich einer Schaufel, einer Strömungsmaschine aus einer TiAl - Legierung sowie ein entsprechend hergestelltes Bauteil.

### STAND DER TECHNIK

Bauteile aus Titanaluminiden bzw. TiAl - Legierungen sind aufgrund ihres geringen spezifischen Gewichts und ihrer mechanischen Eigenschaften für den Einsatz in Gasturbinen, insbesondere Flugturbinen, interessant.

Unter Titanaluminiden bzw. TiAl - Legierungen werden hierbei Legierungen verstanden, die als Hauptbestandteile Titan und Aluminium aufweisen, sodass deren chemische Zusammensetzung als Bestandteile mit den höchsten Anteilen Aluminium und Titan aufweist. Darüber hinaus zeichnen sich TiAl - Legierungen durch die Ausbildung von intermetallischen Phasen, wie γ - TiAl oder α₂ - Ti₃Al aus, die dem Werkstoff gute Festigkeitseigenschaften verleihen.

Allerdings gehen Mikrostrukturen mit hohem Kriechwiderstand üblicherweise mit einer geringen Duktilität einher, sodass Bauteile aus TiAl - Legierungen mit solchen Mikrostrukturen unter Umständen eine zu geringe Duktilität für die Auslegung in hochbelasteten Bereichen besitzen. Dies ist insbesondere bei der Verwendung von TiAl - Legierungen für Schaufeln von Strömungsmaschinen zu beachten.

Entsprechend ist es aus dem Stand der Technik bereits bekannt, Schaufeln für Strömungsmaschinen und insbesondere Flugtriebwerke beispielsweise durch Schweißverbindungen aus mehreren Komponenten zusammenzusetzen, sodass die einzelnen Komponenten der Schaufel entsprechend den unterschiedlichen Anforderungsprofilen aus unterschiedlichen Werkstoffen gebildet werden können, die beispielsweise einerseits eine hohe Duktilität und andererseits eine hohe Festigkeit aufweisen.

In der EP 3 238 868 A1 ist beispielsweise ein Verfahren zum Herstellen einer Schaufel für eine Strömungsmaschine, insbesondere ein Flugtriebwerk, beschrieben, bei welchem Schaufelblatt und Schaufelfuß aus unterschiedlichen TiAl - Legierungen gebildet sind, die durch Schweißverfahren miteinander verbunden werden. Obwohl damit bereits an unterschiedliche Anforderungsprofile angepasste Schaufeln darstellbar sind, besteht ein weiterer Verbesserungsbedarf hinsichtlich einer effizienten und zuverlässigen Herstellung von Schaufeln aus TiAl - Legierungen, die unterschiedlichen und teilweise divergierenden Anforderungen genügen.

Bauteile mit unterschiedlichen Bereichen aus unterschiedlichen Werkstoffen sind aus den Dokumenten EP3216547A1 und DE102011008809A1 bekannt. Weitere Bauteile oder Verfahren sind bekannt aus den Dokumenten EP3238868A1 und DE102015103422B3 sowie aus dem Artikel GUSSONE JOACHIM ET AL: "Microstructure of [gamma]-titanium aluminide processed by selective laser melting at elevated temperat", INTERMETALLICS, ELSEVIER SCIENCE PUBLISHERS B.V, GB, Bd. 66, 18. Juli 2015 (2015-07-18), Seiten 133-140, aus dem Artikel GE WENJUN ET AL: "Effect of Process Parameters an Microstructure of TiAl Alloy Produced by Electron Beam Selective Melting", PROCEDIA ENGINEERING, ELSEVIER, AMSTERDAM, NL, Bd. 81, 15. Oktober 2014 (2014-10-15), Seiten 1192-1197, aus dem Artikel TANG H P ET AL: "Additive manufacturing of a high niobium-containing titanium aluminide alloy by selective electron beam melting", MATERIALS SCIENCE AND ENGINEERING: A, Bd. 636, 31. März 2015 (2015-03-31), Seiten 103-107, aus dem Artikel SCHWERDTFEGER JAN ET AL: "Selective electron beam melting of Ti-48AI-2Nb-2Cr: Microstructure and al", INTERMETALLICS, ELSEVIER SCIENCE PUBLISHERS B.V, GB, Bd. 49, 31. Januar 2014 (2014-01-31), Seiten 29-35, aus dem Artikel GUSSONE J ET AL: "Microstructure stability of [gamma]-TiAl produced by selective laser melting", SCRIPTA MATERIALIA, Bd. 130 , Seiten 110-113 und aus dem Artikel QU H P ET AL: "Microstructure and mechanical property of laser melting deposition (LMD) Ti/TiAl structural gradient material", MATERIALS AND DESIGN, LONDON, GB, Bd. 31, Nr. 1, 1. Januar 2010 (2010-01-01), Seiten 574-582.

### OFFENBARUNG DER ERFINDUNG

### AUFGABE DER ERFINDUNG

Es ist deshalb Aufgabe der vorliegenden Erfindung ein Verfahren zur Herstellung eines Bauteils, nämlich einer Schaufel, einer Strömungsmaschine aus einer TiAl - Legierung sowie ein entsprechend hergestelltes Bauteil bereitzustellen, wobei das Verfahren eine effiziente Herstellung des an unterschiedliche Anforderungen angepassten Bauteils aus einer TiAl - Legierung ermöglichen soll. Das Bauteil soll hierbei zuverlässig die geforderten Eigenschaften aufweisen und insbesondere geeignet für den Einsatz in Flugtriebwerken sein, wobei es insbesondere den lokalen Anforderungen entsprechend Bereiche mit hoher Festigkeit und Dehnpotential und Bereiche mit hohem Kriechwiderstand unabhängig voneinander eingestellt werden können.

### TECHNISCHE LÖSUNG

Diese Aufgabe wird gelöst durch ein Verfahren mit den Merkmalen des Anspruchs 1 sowie ein Bauteil mit den Merkmalen des Anspruchs 11. Vorteilhafte Ausgestaltungen sind Gegenstand der abhängigen Ansprüche.

Die Erfindung schlägt zur Lösung der oben genannten Aufgabenstellung vor, das gewünschte Bauteil aus einer TiAl - Legierung durch eine additive Fertigung aus einem Pulvermaterial herzustellen. Als additive Fertigungsverfahren kommen beispielsweise selektives Laserschmelzen, selektives Elektronenstrahlschmelzen oder Auftragsschweißen in Betracht. Um das Bauteil an die verschiedenen Anforderungen, wie beispielsweise ausreichende Duktilität bei der Schlagbeanspruchungen und hohe Festigkeit bei hohen Temperaturen und insbesondere Kriechfestigkeit, anzupassen, wird weiterhin vorgeschlagen das Bauteil in unterschiedlichen Bauteilbereichen mit einer unterschiedlichen chemischen Zusammensetzung auszubilden, wobei jedoch als Ausgangsmaterial für die additive Fertigung nur ein einziges Pulvermaterial mit einer einzigen einheitlichen chemischen Zusammensetzung eingesetzt werden soll. Die verschiedenen Bauteilbereiche, nämlich mindestens einen ersten Bauteilbereich, der ein erstes Eigenschaftsprofil aufweisen soll, und mindestens einen zweiten Bauteilbereich, der ein zweites Eigenschaftsprofil aufweisen soll, welches von dem ersten Eigenschaftsprofil unterschiedlich ist, können in Abhängigkeit von den Anforderungen an das Bauteil und die Geometrie des Bauteils zu Beginn der Herstellung des Bauteils entsprechend definiert werden. Beispielsweise kann bei einer Schaufel für eine Strömungsmaschine und insbesondere ein Flugtriebwerk bestimmt werden, dass der Schaufelfuß sowie ein äußerer Bereich des Schaufelblatts eine bestimmte Mindestduktilität aufweisen sollen, während der Kernbereich des Schaufelblatts eine hohe Kriechfestigkeit besitzen soll. Entsprechend wird als erster Bauteilbereich ein Randbereich der Schaufel und als zweiter Bauteilbereich ein Kernbereich der Schaufel definiert. Insbesondere kann als erster Bauteilbereich der Fuß bzw. die Hülle des Schaufelblatts definiert werden und als zweiter Bauteilbereich der Kern des Schaufelblatts.

Erfindungsgemäß soll die Variation der chemischen Zusammensetzung in den verschiedenen Bauteilbereichen zur Erzielung unterschiedlicher Eigenschaftsprofile dadurch erreicht werden, dass die Pulverpartikel aus der TiAl - Legierung, die zur additiven Fertigung eingesetzt werden, unter unterschiedlichen Bedingungen in den verschiedenen Bauteilbereichen aufgeschmolzen werden, sodass das erzeugte Bauteil in den verschiedenen Bauteilbereichen unterschiedliche chemische Zusammensetzungen und damit unterschiedliche Eigenschaftsprofile aufweist.

Die chemische Zusammensetzung des Pulvers und der Pulverpartikel, das bzw. die für verschiedenen Bauteilbereiche verwendet wird bzw. werden, ist dabei dieselbe.

Unterschiedliche Bedingungen zum Aufschmelzen und Wieder - Erstarren des Pulvers bei der additiven Fertigung, die zu unterschiedlich chemischen Zusammensetzungen in den entsprechenden Bauteilbereichen führen, können beispielsweise durch unterschiedliche Aufschmelztemperaturen und / oder unterschiedliche Haltezeiten des Pulvers im aufgeschmolzenem Zustand und / oder unterschiedliche Umgebungsdrücke der bei der additiven Fertigung herrschenden Umgebungsatmosphäre realisiert werden.

Unterschiedliche Aufschmelztemperaturen und / oder unterschiedliche Umgebungsdrücke der umgebenden Atmosphäre, wie beispielsweise einer Schutzgasatmosphäre, bei der additiven Fertigung führen beispielsweise zu einem unterschiedlichen Verdampfen von Legierungsbestandteilen, sodass die chemische Zusammensetzung der abgeschiedenen Bauteilbereiche beeinflusst werden kann. Bei der verwendeten TiAl - Legierung soll erfindungsgemäß durch die unterschiedlichen Bedingungen beim Aufschmelzen des TiAl - Pulvers erreicht werden, dass unterschiedliche Anteile an Aluminium in den entsprechenden Bauteilbereichen die unter den unterschiedlichen Bedingungen abgeschieden worden sind, enthalten sind. Durch die unterschiedlichen Aluminiumanteile können entsprechend unterschiedliche Gefügeausbildungen realisiert werden, sodass beispielsweise in einem ersten Bauteilbereich, beispielsweise einer Hülle des Schaufelblatts, eine höhere Duktilität und im zweiten Bauteilbereich, beispielsweise dem Kern eines Schaufelblatts, eine höhere Kriechfestigkeit realisiert werden können.

Die Abscheidebedingungen der TiAl - Legierung werden im ersten Bauteilbereich so gewählt, dass beim Aufschmelzen des TiAl - Pulvers 0 bis 1 at.% Aluminium abgedampft werden, während im zweiten Bauteilbereich die Abscheidebedingungen so gewählt werden, dass 2 bis 4 at.% Aluminium abgedampft werden. Entsprechend beträgt der Unterschied im Aluminiumgehalt zwischen den verschiedenen Bauteilbereichen mindestens 1 at.%.

In den unterschiedlichen Bauteilbereichen, in denen die Pulverpartikel bei der additiven Fertigung unter unterschiedlichen Bedingungen abgeschieden werden, können die Abscheidebedingungen auch über den jeweiligen Bauteilbereich variiert werden, sodass innerhalb des Bauteilbereichs ein Gradientenwerkstoff mit kontinuierlich oder schrittweise sich ändernder chemischer Zusammensetzung entsteht.

Insbesondere können an den Grenzbereichen der jeweiligen Bauteilbereiche Übergangsbereiche vorgesehen werden, in denen die chemische Zusammensetzung bzw. die Eigenschaftsprofile oder die Gefügeausbildung kontinuierlich oder schrittweise an die Bauteilbereiche angepasst werden, die den jeweiligen Bauteilbereich umgeben.

Die einzelnen Bauteilbereichen können mit definierter geometrischer Genauigkeit, beispielsweise mit einer Genauigkeit von +/- 500 µm, vorzugsweise +/- 200 µm realisiert werden.

Das für die additive Fertigung bereitgestellte TiAl - Pulver kann aus einer Legierung bestehen, die 45,5 bis 48 at.% Al, 4 bis 6 at.% Nb und von den Legierungselementen Mo, W, Zr, Si, C und B in Summe bis zu 2 at.% enthält und Rest Ti sowie unvermeidbare Verunreinigungen aufweist. Nach der additiven Verarbeitung kann das hergestellte Bauteil erste Bauteilbereiche aufweisen, die maximal 44,5 bis 48 at.% Al, 4 bis 6 at.% Nb und von den Legierungselementen Mo, W, Zr,

Si, C und B in Summe bis zu 2 at.% und Rest Ti sowie unvermeidbare Verunreinigungen enthalten, sowie zweite Bauteilbereiche, die minimal 43,5 bis 46 at.% Al, 4 bis 6 at.% Nb und von den Legierungselementen Mo, W, Zr, Si, C und B in Summe bis zu 2 at.% und Rest Ti sowie unvermeidbare Verunreinigungen enthalten.

Als TiAl - Legierung für das für die additive Fertigung bereitgestellte TiAl - Pulver kann insbesondere eine sogenannte TNM - Legierung eingesetzt werden, die die 45,5 bis 48 at.% Al, 4 at.% Nb, 1 at.% Mo, 0.1 at.% B und Rest Ti sowie unvermeidbare Verunreinigungen aufweist, wobei vorzugsweise im hergestellten Bauteil in den zweiten Bauteilbereichen eine Zusammensetzung mit 43.5 at.% Al, 4 at.% Nb, 1 at.% Mo, 0.1 at.% B und Rest Ti sowie unvermeidbaren Verunreinigungen vorliegt.

Das entsprechend additive gefertigte Bauteil, nämlich eine Schaufel einer Strömungsmaschine, kann nach der additiven Fertigung mit der Ausbildung von Bauteilbereichen mit unterschiedlicher chemischer Zusammensetzung einer Wärmebehandlung unterzogen werden, sodass durch die unterschiedlichen chemischen Zusammensetzungen in den verschiedenen Bauteilbereichen unterschiedliche Gefügebereiche ausgebildet werden, die entsprechend für unterschiedliche Eigenschaftsprofile in den Bauteilbereichen sorgen.

So kann das additive gefertigte Bauteil aus einer TiAl - Legierung zunächst einer Lösungsglühbehandlung unterzogen werden, die im Bereich der Solvus - Temperatur (Lösungstemperatur) der γ - Phase (γ - TiAl) liegt und insbesondere im Bauteilbereich mit dem höchsten Aluminiumgehalt 20 bis 50 °C, vorzugsweise 30 °C unterhalb der Solvus - Temperatur durchgeführt wird. Insbesondere kann die Lösungsglühbehandlung unterhalb der Solvus - Temperatur des Bauteilbereichs mit dem höchsten Aluminiumgehalt durchgeführt werden, sodass in den Bereichen mit hohem Aluminiumgehalt eine Homogenisierung des Gefüges ohne Auflösung von γ - TiAl stattfindet. Gleichzeitig wird jedoch in Bauteilbereichen mit niedrigerem Aluminiumgehalt, die aufgrund des niedrigeren Aluminiumgehalts eine niedrigere Solvus - Temperatur für das γ - TiAl aufweisen, ein Auflösen des γ - TiAl stattfinden, sodass in diesen Bereichen mit niedrigerem Aluminiumgehalt ein lamellares γ - TiAl - Gefüge ohne globularem γ - TiAl nach dem Abkühlen von der Lösungsglühbehandlungstemperatur ausgebildet wird.

Entsprechend können sich in den Bereichen mit hohem Aluminiumgehalt Anteile an globularem y - TiAl von größer oder gleich 30 Vol.% ausbilden, während in den Bereichen mit niedrigerem Aluminiumgehalt ein Gefüge entstehen kann, welches einen Anteil an globularem y - TiAl von weniger oder gleich 1 Vol.% aufweist. Entsprechend besitzt der Bauteilbereich mit hohem Aluminiumgehalt und hohem Anteil an globularem y - TiAl eine höhere Duktilität als der Bauteilbereich mit niedrigem Aluminiumgehalt und niedrigem Anteil an globularem y - TiAl. Entsprechend ist es vorteilhaft für eine Schaufel einer Strömungsmaschine den Kern des Schaufelblatts mit niedrigem Aluminiumgehalt und niedrigem Anteil an globularem y - TiAl auszubilden, während die übrigen Bereiche und insbesondere der Bereich des Fußes und der Hülle bzw. Schale des Schaufelblatt mit hohem Aluminiumanteil und hohem Anteil an globularem y - TiAl ausgebildet werden kann.

Bei der vorliegenden Erfindung ist von ersten und zweiten Bauteilbereichen die Rede, aber es können selbstverständlich auch dritte und weitere Bauteilbereiche mit anderen Eigenschaftsprofilen vorgesehen werden. Bei einer Schaufel gemäß der Erfindung mit einem Bauteilbereich mit einem Kern mit niedrigem Aluminiumgehalt und niedrigem Anteil an globularem y - TiAl kann der Rest der Schaufel durch einen einzigen weiteren Bauteilbereich gebildet sein oder der Rest der Schaufel kann durch mehrere verschiedene Bauteilbereiche mit unterschiedlichen chemischen Zusammensetzungen und unterschiedlichen Eigenschaftsprofilen gebildet sein.

Die Wärmebehandlung des additive gefertigten Bauteils kann eine weitere Glühbehandlung in Form einer Auslagerungsglühung umfassen, bei der das Bauteil für eine bestimmte Zeit, beispielsweise 2 bis 6 Stunden im Bereich der späteren Betriebstemperaturen ausgelagert wird, um ein thermodynamisches Gleichgewicht im Bauteil einzustellen. Entsprechend kann bei einem TiAl - Bauteil für eine Strömungsmaschine die Auslagerungsglühung im Bereich von 800 bis 950°C durchgeführt werden.

### KURZBESCHREIBUNG DER FIGUREN

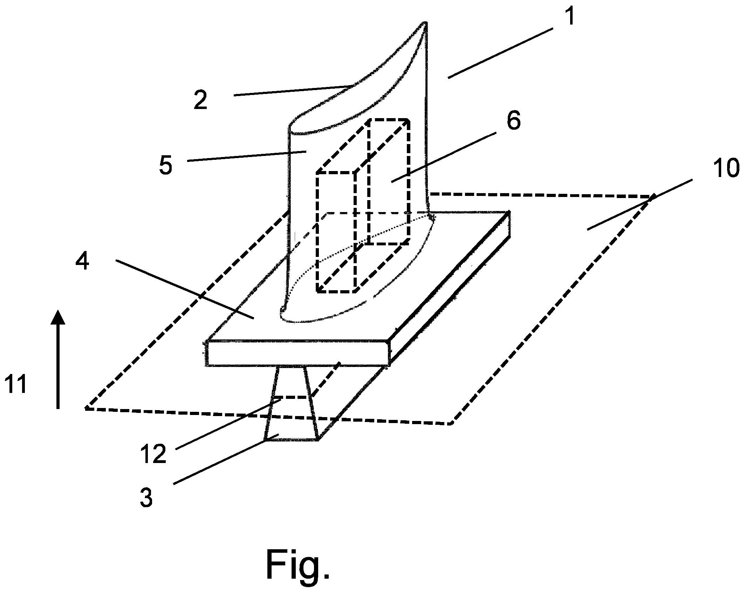

Die beigefügte Zeichnung zeigt in rein schematischer Weise in der einzigen beigefügten Figur eine Darstellung einer Turbinenschaufel, die entsprechend dem erfindungsgemäßen Verfahren hergestellt wird.

### AUSFÜHRUNGSBEISPIELE

Weitere Vorteile, Kennzeichen und Merkmale der vorliegenden Erfindung werden bei der nachfolgenden detaillierten Beschreibung der Ausführungsbeispiele ersichtlich. Allerdings ist die Erfindung nicht auf diese Ausführungsbeispiele beschränkt.

Die Figur zeigt eine Schaufel 1 einer Strömungsmaschine mit einem Schaufelblatt 2 und einem Schaufelfuß 3 sowie einem zwischen Schaufelblatt 2 und Schaufelfuß 3 angeordneten, inneren Deckband 4. Die Schaufel 1 ist aus einer TiAl - Legierung gebildet, die beispielsweise eine Zusammensetzung mit 43,5 at.% Aluminium, 4 at.% Niob, 1 at.% Molybdän sowie 0,1 at.% Bor und Rest Titan sowie unvermeidbare Verunreinigungen aufweist. Die Schaufel 1 ist additiv aus einem Pulvermaterial der TiAl - Legierung durch selektives Laserstrahlschmelzen oder selektives Elektronenstrahlschmelzen gebildet, bei welchen schichtweise entsprechend dem Querschnitt der Schaufel 1 in einer entsprechenden Aufbauschicht auf dem bereits hergestellten Teil der Schaufel 1 durch Aufschmelzen und Erstarren von Pulver aus der TiAl - Legierung die Schaufel 1 gebildet wird.

In der Figur ist eine Ebene 10 dargestellt, die beispielsweise den Schaufelfuß 3 schneidet, sodass sich ein rechteckiger Querschnitt 12 des Schaufelfußes 3 ergibt. Beim schichtweisen Aufbau der Schaufel 1 entlang der Aufbaurichtung 11, die durch den Pfeil angegeben ist, mit schichtweisem Abscheiden des TiAl - Pulvers in Schichten parallel zur Ebene 10 wird in der entsprechenden Schicht, die hier durch den Querschnitt 12 des Schaufelfußes 3 gegeben ist, Pulvermaterial durch Aufschmelzen und Erstarren abgeschieden, also im gezeigten Beispiel der Ebene 10 eine rechteckige Schicht des Pulvermaterials auf dem bereits bestehenden Teil des Schaufelfußes 3. Demgemäß wird entlang der Aufbaurichtung 11 jeweils ein Querschnittsbereich der Schaufel 1, der sich durch einen Querschnitt der Schaufel 1 mit einer zur Ebene 10 parallelen Ebene ergibt, durch Aufschmelzen und nachfolgendes Erstarren von Pulvermaterial abgeschieden.

Wie sich aus der beigefügten Figur ergibt, werden der Schaufelfuß 3 und das Deckband 4 homogen aus der TiAl - Legierung des Pulvermaterials aufgebaut, während im Bereich des Schaufelblatts 2 die Schaufel 1 zwei unterschiedliche Bauteilbereiche aufweist, nämlich einen ersten Bauteilbereich 5 in Form einer Hülle oder Schale und einen zweiten Bauteilbereichs 6 in Form eines Kerns des Schaufelblatts 2.

Der erste Bauteilbereich 5 und der zweite Bauteilbereich 6 des Schaufelblatts 2 unterscheiden sich hinsichtlich ihrer chemischen Zusammensetzung und der Gefügeausbildung. Im ersten Bauteilbereich 5, der die Hülle oder Schale des Schaufelblatts 2 bildet, weist die Schaufel 1 einen höheren Aluminiumanteil auf, als im zweiten Bauteilbereich 6, der den Kern des Schaufelblatts 2 bildet. Entsprechend erweist das Gefüge des ersten Bauteilbereichs 5 einen höheren Anteil an globularer y - Phase (y - TiAl) auf, als der zweite Bauteilbereich 6. Beispielsweise kann der Anteil an globularer y - Phase im ersten Bauteilbereich 5 größer oder gleich 30 Vol.% betragen, während der Anteil an globularem y - TiAl im zweiten Bauteilbereich 6 bei kleiner oder gleich 1 Vol.% liegen kann. Durch den hohen Anteil an globularem y - TiAl im ersten Bauteilbereich 5 weist der erste Bauteilbereich 5 in Form der Hülle oder Schale eine höhere Duktilität auf, als der zweite Bauteilbereich 6. Demgegenüber besitzt der zweite Bauteilbereich 6 in Form des Kerns des Schaufelblatts 2 jedoch aufgrund des niedrigen Anteils an globularem y - TiAl eine höhere Kriechfestigkeit, sodass bei hohen Einsatztemperaturen und Fliehkräften, die auf Laufschaufeln von Strömungsmaschinen wirken, die Kriechverformung des Schaufelblatts 2 verhindert bzw. zumindest begrenzt werden kann.

Die unterschiedliche chemische Zusammensetzung mit einem unterschiedlichen Aluminiumgehalt im ersten Bauteilbereich 5 und im zweiten Bauteilbereich 6 sowie die sich daraus ergebende unterschiedliche Gefügeausbildung mit unterschiedlichem Anteil an globularem y - TiAl kann bei der additiven Herstellung durch selektives Laserschmelzen oder selektives Elektronenstrahlschmelzen dadurch erreicht werden, dass das Pulvermaterial aus der TiAl - Legierung unter unterschiedlichen Bedingungen aufgeschmolzen und wieder erstarrt wird. So kann im zweiten Bauteilbereich 6, der den Kern des Schaufelblatts 2 bildet, die Abscheidung des Pulvermaterials aus der TiAl - Legierung so erfolgen, dass während der Abscheidung, also während dem Aufschmelzen und Wieder - Erstarren mehr Aluminium verdampft, sodass der Aluminiumanteil im zweiten Bauteilbereich 6 verringert wird. Dies kann beispielsweise dadurch erreicht werden, dass die Aufschmelztemperatur erhöht und / oder der Druck der umgebenden Atmosphäre, beispielsweise einer Schutzgasatmosphäre, verringert wird.

Entsprechend weist die Schaufel 1 im zweiten Bauteilbereich 6 nach der additiven Fertigung einen geringeren Aluminiumanteil auf. Bei einer nachfolgenden Wärmebehandlung, beispielsweise durch heißisostatisches Pressen bei einer hohen Temperatur nahe der Solvus - Temperatur des y - TiAl für den ersten Bauteilbereich mit hohem Aluminiumanteil, also der Lösungstemperatur des y - TiAl, bei der sich y - TiAl auflöst, aber unterhalb der Schmelztemperatur bzw. Solidustemperatur kommt es im zweiten Bauteilbereich 5 mit niedrigem Aluminiumanteil, bei dem die Solvus - Temperatur niedriger ist, zu einer Auflösung des y - TiAl, sodass im zweiten Bauteilbereich 6 nach der Abkühlung von der Lösungsglühtemperatur bzw. der Temperatur für das heißisostatische Pressen im zweiten Bauteilbereich 6 der Anteil des globularem y - TiAl gering ist. Stattdessen bildet sich lamellares y - TiAl, welches eine hohe Kriechfestigkeit aufweist, aber eine geringere Duktilität..

Nach der Lösungsglühbehandlung bzw. dem heißisostatischen Pressen kann eine weitere Temperaturbehandlung durchgeführt werden, bei der die Schaufel 1 zur Überführung der Schaufel 1 ins thermodynamische Gleichgewicht im Bereich der Betriebstemperaturen der Schaufel, beispielsweise im Bereich von 850 bis 950°C für 2 bis 6 Stunden einer Auslagerungsglühung unterzogen wird. Danach kann noch eine abschließende Endbearbeitung der Schaufel 1 erfolgen.

Obwohl die vorliegende Erfindung anhand der Ausführungsbeispiele detailliert beschrieben worden ist, ist für den Fachmann selbstverständlich, dass die Erfindung nicht auf diese Ausführungsbeispiele beschränkt ist, sondern dass vielmehr Abwandlungen in der Weise möglich sind, dass einzelne Merkmale weggelassen oder andersartige Kombinationen von Merkmalen verwirklicht werden können, ohne dass der Schutzbereich der beigefügten Ansprüche verlassen wird. Insbesondere schließt die vorliegende Offenbarung sämtliche Kombinationen der in den verschiedenen Ausführungsbeispielen gezeigten Einzelmerkmale mit ein, sodass einzelne Merkmale, die nur in Zusammenhang mit einem Ausführungsbeispiel beschrieben sind, auch bei anderen Ausführungsbeispielen oder nicht explizit dargestellten Kombinationen von Einzelmerkmalen eingesetzt werden können.

### BEZUGSZEICHENLISTE

- 1: Schaufel
- 2: Schaufelblatt
- 3: Schaufelfuß
- 4: inneres Deckband
- 5: erster Bauteilbereich, Hülle
- 6: zweiter Bauteilbereich, Kern
- 10: Ebene
- 11: Aufbaurichtung
- 12: Querschnitt

## Patentansprüche

1. Verfahren zur Herstellung eines Bauteils, nämlich einer Schaufel, einer Strömungsmaschine aus einer TiAl - Legierung, welches folgende Schritte umfasst:
Definieren von mindestens einem ersten Bauteilbereich (5), der ein erstes Eigenschaftsprofil aufweisen soll, wobei als erster Bauteilbereich ein Randbereich der Schaufel definiert wird, und von mindestens einem zweiten Bauteilbereich (6), der ein zweites Eigenschaftsprofil aufweisen soll, welches von dem ersten Eigenschaftsprofil unterschiedlich ist, wobei als zweiter Bauteilbereich ein Kernbereich der Schaufel definiert wird, Bereitstellen eines Pulvers aus der TiAl - Legierung,
additive Fertigung des Bauteils aus dem Pulver aus der TiAl - Legierung, wobei das Pulver aus der TiAl - Legierung zur stoffschlüssigen Verbindung der Pulverpartikel untereinander und mit einem Substrat oder einem bereits hergestellten Teil des Bauteils aufgeschmolzen wird, **dadurch gekennzeichnet, dass** die Pulverpartikel zur Ausbildung des ersten Bauteilbereichs (5) und die Pulverpartikel zur Ausbildung des zweiten Bauteilbereichs (6) unter derart unterschiedlichen Bedingungen aufgeschmolzen werden, sodass im ersten Bauteilbereich (5) beim Aufschmelzen des Pulvers 0 bis 1 at.% Al abgedampft werden und im zweiten Bauteilbereich (6) 2 bis 4 at.% Al abgedampft werden und sich im ersten Bauteilbereich (5) und im zweiten Bauteilbereich (6) unterschiedliche chemische Zusammensetzungen des abgeschiedenen Materials ergeben, wobei sich die chemische Zusammensetzung des ersten Bauteilbereichs durch eine Verringerung des Al-Anteils um 0 bis 1 at.% einer bestimmten chemischen TiAl-Zusammensetzung ergibt und sich die chemische Zusammensetzung des zweiten Bauteilbereichs durch eine Verringerung des Al-Anteils um 2 bis 4 at.% derselben bestimmten chemischen TiAl-Zusammensetzung ergibt.

2. Verfahren nach Anspruch 1,
**dadurch gekennzeichnet, dass**
die unterschiedlichen Bedingungen zum Aufschmelzen des Pulvers unterschiedliche Aufschmelztemperaturen und / oder unterschiedliche Haltezeiten im aufgeschmolzenem Zustand und / oder unterschiedliche Umgebungsdrücke aufweisen.

3. Verfahren nach einem der vorhergehenden Ansprüche,
**dadurch gekennzeichnet, dass**
die unterschiedlichen Bedingungen zum Aufschmelzen des Pulvers bei der Herstellung des ersten und / oder des zweiten Bauteilbereichs (5,6) über den entsprechenden ersten und / oder den zweiten Bauteilbereich (5,6) so variiert werden, dass im entsprechenden ersten und / oder zweiten Bauteilbereich (5,6) ein Gradientenwerkstoff abgeschieden wird.

4. Verfahren nach einem der vorhergehenden Ansprüche,
**dadurch gekennzeichnet, dass**
das Eigenschaftsprofil des ersten Bauteilbereichs (5) eine höhere Duktilität als im zweiten Bauteilbereich umfasst und / oder dass das Eigenschaftsprofil im zweiten Bauteilbereich (6) eine höhere Kriechfestigkeit als im ersten Bauteilbereich umfasst.

5. Verfahren nach einem der vorhergehenden Ansprüche,
**dadurch gekennzeichnet, dass**
dritte oder weitere Bauteilbereiche definiert werden, die unterschiedliche Eigenschaftsprofile zu den ersten und / oder zweiten Bauteilbereichen (5,6) aufweisen.

6. Verfahren nach einem der vorhergehenden Ansprüche,
**dadurch gekennzeichnet, dass**
die ersten und / oder zweiten Bauteilbereiche (5,6) so ausgebildet werden, dass sie an ihren Grenzen Übergangsbereiche aufweisen, in denen die Eigenschaftsprofile und / oder die chemischen Zusammensetzungen und / oder die Gefügeausbildungen schrittweise oder kontinuierlich an die Umgebungsbereiche angeglichen werden.

7. Verfahren nach einem der vorhergehenden Ansprüche,
**dadurch gekennzeichnet, dass**
die additive Fertigung das selektive Laserstrahlschmelzen, das selektive Elektronenstrahlschmelzen und das Auftragsschweißen umfasst.

8. Verfahren nach einem der vorhergehenden Ansprüche,
**dadurch gekennzeichnet, dass**
das für die additive Fertigung bereitgestellte TiAl - Pulver aus einer Legierung besteht, die 45,5 bis 48 at.% Al, 4 bis 6 at.% Nb und von den Legierungselementen Mo, W, Zr, Si, C und B in Summe bis zu 2 at.% enthält und Rest Ti sowie unvermeidbare Verunreinigungen aufweist und dass nach der additiven Verarbeitung das hergestellte Bauteil erste Bauteilbereiche (5), die maximal 44,5 bis 48 at.% Al, 4 bis 6 at.% Nb und von den Legierungselementen Mo, W, Zr, Si, C und B in Summe bis zu 2 at.% und Rest Ti sowie unvermeidbare Verunreinigungen enthalten, und zweite Bauteilbereiche (6) aufweist, die minimal 43,5 bis 46 at.% Al, 4 bis 6 at.% Nb und von den Legierungselementen Mo, W, Zr, Si, C und B in Summe bis zu 2 at.% und Rest Ti sowie unvermeidbare Verunreinigungen enthalten.

9. Verfahren nach einem der vorhergehenden Ansprüche,
**dadurch gekennzeichnet, dass**
nach der additiven Fertigung das Bauteil einer Wärmebehandlung ausgesetzt wird, insbesondere eine Wärmebehandlung die mindestens zwei verschiedene Glühbehandlungen umfasst, nämlich ein Lösungsglühen im Bereich der Lösungstemperatur für y - TiAl und eine Auslagerungsbehandlung bei 800 bis 950°C für 2 bis 6 Stunden mit Ofenabkühlung.

10. Verfahren nach Anspruch 10,
**dadurch gekennzeichnet, dass**
das Lösungsglühen mit einem heißisostatischen Pressen des Bauteils durchgeführt wird und / oder dass das Lösungsglühen bei eine Temperatur 50 bis 20°C unterhalb der Lösungstemperatur des y - TiAl des ersten Bauteilbereichs oder des Bauteilbereichs mit der höchsten Al - Konzentration durchgeführt wird.

11. Bauteil, nämlich Schaufel, einer Strömungsmaschine aus einer TiAl - Legierung, welches einstückig durch additive Fertigung gefertigt ist, wobei das Bauteil (1) mindestens einen ersten Bauteilbereich (5), der ein erstes Eigenschaftsprofil aufweist, und mindestens einen zweiten Bauteilbereich (6) umfasst, der ein zweites Eigenschaftsprofil aufweist, welches von dem ersten Eigenschaftsprofil unterschiedlich ist, wobei der erste Bauteilbereich ein Randbereich der Schaufel und der zweite Bauteilbereich ein Kernbereich der Schaufel ist, wobei erster und zweiter Bauteilbereich (5,6) unterschiedliche chemische Zusammensetzungen und unterschiedliche Gefügeausbildungen aufweisen, **dadurch gekennzeichnet, dass** sich die chemische Zusammensetzung des ersten Bauteilbereichs durch eine Verringerung des Al-Anteils um 0 bis 1 at.% einer bestimmten chemischen TiAl-Zusammensetzung ergibt und sich die chemische Zusammensetzung des zweiten Bauteilbereichs durch eine Verringerung des Al-Anteils um 2 bis 4 at.% derselben bestimmten chemischen TiAl-Zusammensetzung ergibt.

12. Bauteil nach Anspruch 11,
**dadurch gekennzeichnet, dass**
der erste Bauteilbereich (5) eine höhere Duktilität als der zweite Bauteilbereich (6) aufweist und der zweite Bauteilbereich (6) eine höhere Kriechfestigkeit als der erste Bauteilbereich (5) aufweist.

13. Bauteil nach Anspruch 11 oder 12,
**dadurch gekennzeichnet, dass**
der erste Bauteilbereich (5) ein Gefüge mit größer oder gleich 30 Vol.% globularem γ - TiAl und der zweite Bauteilbereich (6) ein Gefüge mit kleiner oder gleich 1 Vol.% globularem y - TiAl aufweist.

## Claims

1. Method for producing a component, specifically a blade, of a turbomachine from a TiAl alloy, which method comprises the following steps:
defining at least one first component region (5) which is intended to have a first property profile, an edge region of the blade being defined as the first component region, and defining at least one second component region (6) which is intended to have a second property profile which differs from the first property profile, a core region of the blade being defined as the second component region;
providing a powder made from the TiAl alloy;
additively manufacturing the component from the powder made from the TiAl alloy, the powder made from the TiAl alloy being melted to form an integral connection of the powder particles with one another and being melted to a substrate or a part of the component that has already been produced, **characterized in that** the powder particles for forming the first component region (5) and the powder particles for forming the second component region (6) are melted under such different conditions that, in the first component region (5), 0 to 1 at.% Al is evaporated when the powder is melted and, in the second component region (6), 2 to 4 at.% Al is evaporated and different chemical compositions of the deposited material result in the first component region (5) and in the second component region (6), the chemical composition of the first component region resulting from a reduction in the Al content by 0 to 1 at.% of a specific chemical TiAl composition and the chemical composition of the second component region resulting from a reduction in the Al content by 2 to 4 at.% of the same specific TiAl chemical composition.

2. Method according to claim 1,
**characterized in that**
the different conditions for melting the powder have different melting temperatures and/or different holding times in the melted state and/or different ambient pressures.

3. Method according to either of the preceding claims,
**characterized in that**
the different conditions for melting the powder during the production of the first and/or the second component region (5.6) can be varied over the corresponding first and/or the second component region (5.6) in such a way that a gradient material is deposited in the corresponding first and/or second component region (5.6).

4. Method according to any of the preceding claims,
**characterized in that**
the property profile of the first component region (5) comprises a higher ductility than in the second component region and/or **in that** the property profile in the second component region (6) comprises a higher creep resistance than in the first component region.

5. Method according to any of the preceding claims,
**characterized in that**
third or further component regions which have different property profiles from the first and/or second component regions (5, 6) are defined.

6. Method according to any of the preceding claims,
**characterized in that**
the first and/or second component regions (5, 6) are formed such that they have transitional regions at their borders in which the property profiles and/or the chemical compositions and/or the structural formations are gradually or continuously adapted to the surrounding regions.

7. Method according to any of the preceding claims,
**characterized in that**
additive manufacturing comprises selective laser beam melting, selective electron beam melting and deposition welding.

8. Method according to any of the preceding claims,
**characterized in that**
the TiAl powder provided for additive manufacturing consists of an alloy containing 45.5 to 48 at.% Al, 4 to 6 at.% Nb and the alloying elements Mo, W, Zr, Si, C and B in a total of up to 2 at.% and Ti as well as unavoidable impurities as the remainder, and **in that**, after additive processing, the component produced has first component regions (5) containing at most 44.5 to 48 at.% Al, 4 to 6 at.% Nb and the alloying elements Mo, W, Zr, Si, C and B in a total of up to 2 at.% and Ti as well as unavoidable impurities as the remainder, and has second component regions (6) containing at least 43.5 to 46 at.% Al, 4 to 6 at.% Nb and the alloying elements Mo, W, Zr, Si, C and B in a total of up to 2 at.% and Ti as well as unavoidable impurities as the remainder.

9. Method according to any of the preceding claims,
**characterized in that**
after additive manufacturing, the component is subjected to a heat treatment, in particular a heat treatment which comprises at least two different annealing treatments, specifically solution annealing in the range of the solution temperature for γ-TiAl and a precipitation treatment at 800 to 950°C for 2 to 6 hours with furnace cooling.

10. Method according to claim 10,
**characterized in that**
solution annealing is carried out by means of hot isostatic pressing of the component and/or **in that** solution annealing is carried out at a temperature which is 50 to 20°C below the solution temperature of the γ-TiAl of the first component region or the component region having the highest Al concentration.

11. Component, specifically a blade, of a turbomachine made of a TiAl alloy, which component is manufactured in one piece by means of additive manufacturing, the component (1) comprising at least one first component region (5) which has a first property profile, and comprising at least one second component region (6) which has a second property profile which differs from the first property profile, the first component region being an edge region of the blade and the second component region being a core region of the blade, the first and the second component region (5, 6) having different chemical compositions and different structural formations, **characterized in that** the chemical composition of the first component regions results from a reduction in the Al content by 0 to 1 at.% of a specific chemical TiAl composition and the chemical composition of the second component region results from a reduction in the Al content by 2 to 4 at.% of the same specific TiAl chemical composition.

12. Component according to claim 11,
**characterized in that**
the first component region (5) has a higher ductility than the second component region (6) and the second component region (6) has a higher creep resistance than the first component region (5).

13. Component according to either claim 11 or claim 12,
**characterized in that**
the first component region (5) has a structure with greater than or equal to 30 vol.% globular γ-TiAl and the second component region (6) has a structure with less than or equal to 1 vol.% globular γ-TiAl.

## Revendications

1. Procédé de fabrication d'un composant, à savoir d'une aube, d'une turbomachine en un alliage TiAI, comprenant les étapes suivantes :
la définition d'au moins une première zone de composant (5), laquelle doit présenter un premier profil de propriétés, dans lequel une zone de bord de l'aube est définie comme première zone de composant, et d'au moins une deuxième zone de composant (6), laquelle doit présenter un second profil de propriétés différent du premier profil de propriétés, dans lequel une zone de noyau de l'aube est définie comme deuxième zone de composant, la fourniture d'une poudre à base de l'alliage TiAI, la fabrication additive du composant à partir de la poudre à base de l'alliage TiAI, dans lequel la poudre à base de l'alliage TiAI est fondue pour la liaison par liaison complémentarité de matière des particules de poudre entre elles et avec un substrat ou une partie déjà fabriquée du composant, **caractérisé en ce que** les particules de poudre pour la formation de la première zone de composant (5) et les particules de poudre pour la formation de la deuxième zone de composant (6) sont fondues dans des différentes conditions de telle sorte que, dans la première zone de composant (5), lors de la fonte de la poudre, 0 à 1 en pourcentage atomique d'AI est évaporé et, dans la deuxième zone de composant (6), 2 à 4 en pourcentage atomique d'AI sont évaporés et, dans la première zone de composant (5) et dans la deuxième zone de composant (6), des compositions chimiques différentes de la matière déposée en résultent, dans lequel la composition chimique de la première zone de composant résulte d'une réduction de la teneur en Al de 0 à 1 en pourcentage atomique d'une composition chimique de TiAI déterminée et la composition chimique de la deuxième zone de composant résulte d'une réduction de la teneur en Al de 2 à 4 en pourcentage atomique de ladite composition chimique de TiAI déterminée.

2. Procédé selon la revendication 1,
**caractérisé en ce que**
les différentes conditions de fusion de la poudre présentent des différentes valeurs de température de fusion et/ou des différents temps de maintien à l'état fondu et/ou des différentes pressions ambiantes.

3. Procédé selon l'une quelconque des revendications précédentes,
**caractérisé en ce que**
les différentes conditions de fusion de la poudre lors de la fabrication de la première et/ou de la deuxième zone de composant (5, 6) peuvent varier au niveau de la première et/ou de la deuxième zone de composant (5, 6) correspondantes de telle sorte qu'un matériau à gradient est déposé dans la première et/ou dans la deuxième zone de composant (5, 6) correspondantes.

4. Procédé selon l'une quelconque des revendications précédentes,
**caractérisé en ce que**
le profil de propriétés de la première zone de composant (5) présente une ductilité supérieure à celle dans la deuxième zone de composant et/ou que le profil de propriétés présente une résistance au fluage, dans la deuxième zone de composant (6), supérieure à celle dans la première zone de composant.

5. Procédé selon l'une quelconque des revendications précédentes,
**caractérisé en ce que**
des troisièmes ou d'autres zones de composant sont définies, lesquelles présentent des profils de propriétés différents par rapport aux première et/ou deuxième zones de composant (5, 6).

6. Procédé selon l'une quelconque des revendications précédentes,
**caractérisé en ce que**
les première et/ou deuxième zones de composant (5, 6) sont formées de telle sorte qu'elles comportent des zones de transition au niveau de leurs bords, dans lesquelles les profils de propriétés et/ou les compositions chimiques et/ou les formations structurelles sont progressivement ou en continu adaptées aux zones environnantes.

7. Procédé selon l'une quelconque des revendications précédentes,
**caractérisé en ce que**
la fabrication additive comprend la fusion sélective par faisceau laser, la fusion sélective par faisceau d'électrons et le soudage par superposition.

8. Procédé selon l'une quelconque des revendications précédentes,
**caractérisé en ce que**
la poudre de TiAI fournie pour la fabrication additive est constituée d'un alliage, lequel contient 45,5 à 48 en pourcentage atomique d'AI, 4 à 6 en pourcentage atomique de Nb et jusqu'à 2 en pourcentage atomique d'un total des éléments d'alliage Mo, W, Zr, Si, C et B et un reste de Ti ainsi que des impuretés inévitables et qu'après le traitement additif, le composant produit comporte des premières zones de composant (5), lesquelles contiennent au plus 44,5 à 48 en pourcentage atomique d'AI, 4 à 6 en pourcentage atomique de Nb et jusqu'à 2 en pourcentage atomique d'un total des éléments d'alliage Mo, W, Zr, Si, C et B et un reste de Ti ainsi que des impuretés inévitables, et des deuxièmes zones de composant (6), lesquelles contiennent au moins 43,5 à 46 en pourcentage atomique d'AI, 4 à 6 en pourcentage atomique de Nb et jusqu'à 2 en pourcentage atomique d'un total des éléments d'alliage Mo, W, Zr, Si, C et B et un reste de Ti ainsi que des impuretés inévitables.

9. Procédé selon l'une quelconque des revendications précédentes,
**caractérisé en ce que**
après la fabrication additive, le composant est soumis à un traitement thermique, en particulier un traitement thermique, lequel comprend au moins deux traitements de recuit différents, à savoir un recuit de mise en solution dans la plage de la température de mise en solution pour du γ-TiAl et un traitement de vieillissement à 800 à 950 °C pendant 2 à 6 heures comportant le refroidissement du four.

10. Procédé selon la revendication 10,
**caractérisé en ce que**
le recuit de mise en solution est mis en œuvre par compression isostatique à chaud du composant et/ou que le recuit de mise en solution est mis en œuvre à une température dans la plage comprise entre 50 et 20 °C inférieure à la température de mise en solution du γ-TiAl de la première zone de composant ou de la zone de composant présentant la concentration en Al la plus élevée.

11. Composant, à savoir aube, d'une turbomachine en un alliage TiAI, laquelle est fabriquée monobloc par fabrication additive, dans lequel le composant (1) comporte au moins une première zone de composant (5), laquelle présente un premier profil de propriétés, et au moins une deuxième zone de composant (6), laquelle présente un second profil de propriétés différent du premier profil de propriétés, dans lequel la première zone de composant est une zone de bord de l'aube et la deuxième zone de composant est une zone de noyau de l'aube, dans lequel les première et deuxième zones de composant (5, 6) présentent des compositions chimiques différentes et des formations structurelles différentes, **caractérisée en ce que** la composition chimique de la première zone de composant résulte d'une réduction de la teneur en Al de 0 à 1 en pourcentage atomique d'une composition chimique de TiAI déterminée et la composition chimique de la deuxième zone de composant résulte d'une réduction de la teneur en Al de 2 à 4 en pourcentage atomique de ladite composition chimique de TiAl déterminée.

12. Pièce selon la revendication 11,
**caractérisé en ce que**
la première zone de composant (5) présente une ductilité supérieure à celle de la deuxième zone de composant (6) et la deuxième zone de composant (6) présente une résistance au fluage supérieure à celle de la première zone de composant (5).

13. Pièce selon la revendication 11 ou 12,
**caractérisé en ce que**
la première zone de composant (5) présente une structure comportant 30 % en volume ou plus de γ-TiAl globulaire et la deuxième zone de composant (6) présente une structure comportant 1 % en volume ou moins de γ-TiAl globulaire.
